# EUROPEAN PATENT APPLICATION

(11) **EP 4 822 176 A1**
(43) Date of publication of application: **14.10.2026**
(21) Application number: 26168626.5
(22) Date of filing: 27.03.2026
(51) Int. Cl.: F03D 80/60, F03D 13/20

(54) **SYSTEM AND METHOD FOR MITIGATING VIBRATIONS ON A WIND TURBINE IN A NON-OPERATING STATE**

(30) Priority: 09.04.2025 US 202519173986
(71) Applicant: GE Vernova Infrastructure Technology LLC, Greenville, SC 29615 (US)
(72) Inventor: Romig, Bryan Wesley, Greenville, SC 29615 (US); Danielsen, Darren John, Greenville, SC 29615 (US)
(74) Representative: Zimmermann & Partner Patentanwälte mbB

(57) **Abstract**

A system and method for mitigating vibrations in one or more rotor blades of a wind turbine when the wind turbine is in a non-operating state is presently disclosed. The method includes receiving a vibration signal indicative of vibrations occurring on or potentially occurring on the one or more rotor blades. The method also includes determining that the vibration signal is above a vibration threshold. Further, the method includes continuously pitching the one or more rotor blades back and forth across a pitch angle range for a certain time period so as to mitigate the vibrations.

## Description

### FIELD

The present disclosure relates in general to wind turbine power generating systems, and more particularly to systems and methods for mitigating vibrations in wind turbines, particularly when the wind turbine is in a non-operating state, by continuously pitching one or more rotor blades thereof.

### BACKGROUND

Modern wind turbines are commonly used to supply electricity into the electrical grid. Wind turbines of this kind generally include a tower and a rotor arranged on the tower. The rotor, which typically includes a hub and a plurality of blades, is set into rotation under the influence of wind on the blades, wherein the rotation generates a torque that is transmitted through a rotor shaft to a generator, either directly ("directly driven") or through the use of a gearbox. This way, the generator produces electricity which can be supplied to the electrical grid.

There is a trend to make wind turbine blades increasingly longer to capture more wind and convert the energy of the wind into electricity. This results in the blades being more flexible and more prone to aero-elastic instabilities, e.g., vibrations of the blades. Vibrating blades create risks of major potential damage in the entire wind turbine.

When the wind turbine is in operation, a wind turbine controller may operate an auxiliary system, such as a pitch system or a yaw drive system, to reduce loads on the blades. This way, vibrations of the blades may be counteracted. However, the problem of aero-elastic instabilities can also be serious in circumstances when the wind turbine is in a non-operating state, such as when idling or locked.

At least two types of vibrations may occur during non-operating states. The first one is vortex induced vibration (VIV), when an angle of attack is around 90 degrees and vortices shed at frequencies close to blade eigen frequencies. The second one is stall induced vibration (SIV), when the angle of attack is close to stall angles (e.g., 15 degrees - 20 degrees or other ranges depending on the wind turbine design) and the flow interaction may lead to blade vibrations. The angle of attack may be understood as a geometrical angle between a flow direction of the wind and the chord of a rotor blade. VIV and SIV are phenomena that, if not adequately designed or compensated for, can lead to blade failure or accelerate blade damage.

When the rotor is locked against rotation, for instance, due to installation, commissioning, or maintenance tasks, the rotor blades can experience aero-elastic instabilities, such as VIV and SIV. Rotor blades are susceptible to these vibrations when angles of attack are within certain ranges. Because the rotor is locked, rotation of the rotor cannot be used to reduce or damp these vibrations. In addition, excessive loads may be placed on the wind turbine components by changing the blade pitch of a locked rotor. For example, some pitch angles may be acceptable to damp the non-operational aero-elastic instabilities (e.g., SIV and VIV), but can result in unacceptable loads on certain wind turbine components. As such, some wind turbines implement aerodynamic devices attached to the rotor blades to reduce vortices and/or increase damping. However, these devices may increase costs and time for installation and removal.

U.S. Patent Publication No.: 2020/0173418 proposes a method for reducing vibrations in the rotor blades of a wind turbine when the wind turbine is in a standstill or locked condition that entails using sensors to first measure one or more deformation parameters indicative of vibrations or oscillations (collectively referred to as vibrations herein) being induced in the rotor blades. The method uses a dedicated controller in communication with the sensors to determine if vibrations exist based on the measured deformation parameters. The dedicated controller is also in communication with an auxiliary pitch drive system and generates an output signal to operate the auxiliary pitch drive system to change the blade pitch between 0 to 90 degrees in order to reduce the vibrations. The method and system of the '418 publication, however, does not consider the loads that may be placed on the wind turbine components by changing the blade pitch of a locked rotor. Some pitch angles may be acceptable to damp the aero-elastic instabilities (e.g., SIV and VIV), but can result in unacceptable loads on certain wind turbine components.

In view of the aforementioned, the present disclosure is directed to systems and methods for mitigating vibrations in wind turbines, particularly when the wind turbine is in a non-operating state, by continuously pitching one or more rotor blades thereof.

### BRIEF DESCRIPTION

Aspects and advantages of the invention will be set forth in part in the following description, or may be obvious from the description, or may be learned through practice of the invention.

In an aspect, the present disclosure is directed to a method for mitigating vibrations occurring on or potentially occurring on one or more rotor blades of a wind turbine when the wind turbine is in a non-operating state. The method includes receiving, via a controller, a vibration signal indicative of the vibrations occurring on or potentially occurring on the one or more rotor blades. The method also includes comparing, via the controller, the vibration signal to a vibration threshold. In response to the vibration signal being above the vibration threshold, the method includes continuously pitching the one or more rotor blades back and forth across a pitch angle range for a certain time period so as to mitigate the vibrations.

In another aspect, the present disclosure is directed to a wind turbine having a plurality of rotor blades on a rotatable hub. The wind turbine also includes one or more sensors configured to detect wind parameters impacting the plurality of rotor blades, a pitch system configured to change a pitch angle of one or more of the plurality of rotor blades, and a controller in operable communication with the pitch system. When the wind turbine is in a non-operating or locked rotor state, the controller is configured to perform a plurality of operations, including but not limited to receiving a vibration signal indicative of the vibrations occurring on or potentially occurring on the one or more of the plurality of rotor blades, comparing, via the controller, the vibration signal to a vibration threshold, and in response to the vibration signal being above the vibration threshold, continuously pitching one or more of the plurality of rotor blades back and forth across a pitch angle range for a certain time period so as to mitigate the vibrations.

These and other features, aspects, and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a simplified, internal view of a nacelle of a wind turbine according to the present disclosure;
FIG. 3 illustrates a plurality of rotor blades of a wind turbine with sensors mounted thereon according to the present disclosure;
FIG. 4 illustrates a block diagram of an embodiment of a controller of a wind turbine according to the present disclosure; and
FIG. 5 illustrates a flow diagram of an embodiment of a method for mitigating vibrations in rotor blades of a wind turbine according to the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present disclosure is directed to a method of preventing or reducing vibrations by continuously pitching one or more wind turbine blades back and forth across a specified range for a specified period. By continuously changing the pitch angle(s), the method presently disclosed reduces or prevents aerodynamic instabilities on a wind turbine blade.

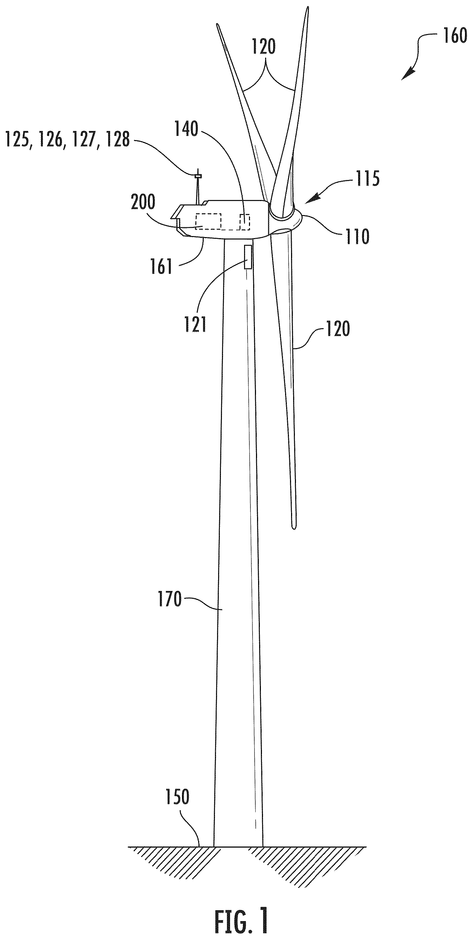

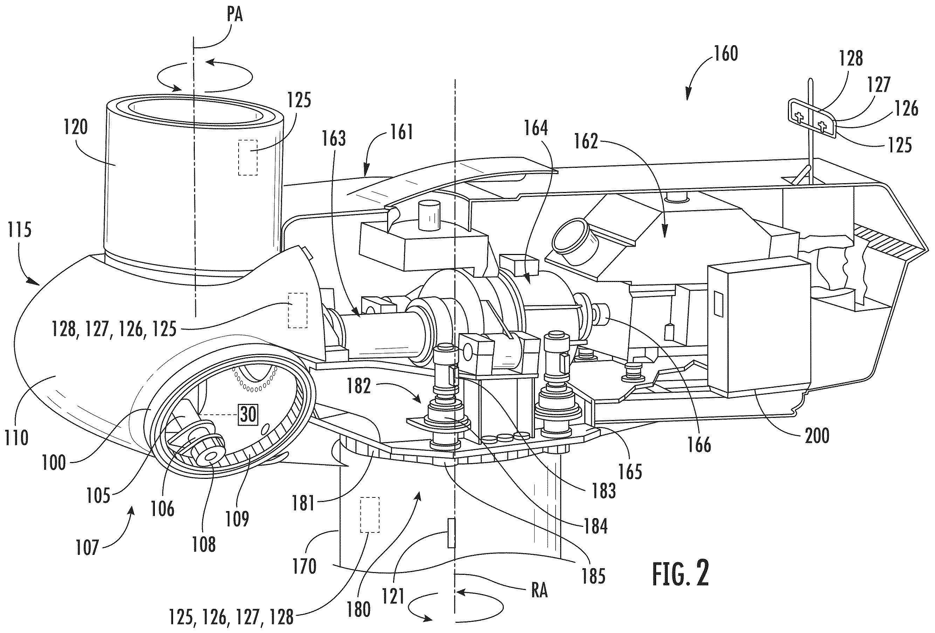

Referring now to the figures, FIG. 1 illustrates a perspective view of an embodiment of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated example, the rotor 115 includes three rotor blades 120. However, in an alternative embodiment, the rotor 115 may include more or less than three rotor blades 120. Each rotor blade 120 is spaced from the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (FIG. 2) positioned within the nacelle 161 or forming part of the nacelle 161 for producing electrical energy. The wind turbine 160 may be placed in an offshore or onshore location.

In addition, as shown, the wind turbine 160 includes a controller 200 that may be centrally located within the nacelle 161 or external to the nacelle 161. However, in other examples, the controller 200 may be located within any other component of the wind turbine 160 or at a location outside the wind turbine 160. Further, the controller 200 may be communicatively coupled to any number of components of the wind turbine 160 in order to control the operation of such components.

For example, the controller 200 may be communicatively coupled to one or more auxiliary systems, such as a pitch drive system 107 (FIG. 2) for adjusting a pitch angle of the rotor blades 120. Alternatively, the controller 200 may include a yaw drive system 180 (FIG. 2) for rotating the nacelle 161 with the respect to the tower 170 around a rotational axis.

Still referring to FIG. 1, the wind turbine 160 may also include a dedicated power source 140. Thus, in an embodiment, where the wind turbine 160 is not generating electrical power nor receiving electrical power from a grid, the dedicated power source 140 may include a battery or a super-capacitor (not illustrated) that stores a predefined amount of energy to supply the controller 200 (or a dedicated controller) and one or more of the auxiliary systems described herein for a predefined period of time. In alternative examples, the dedicated power source 140 may include a fuel generator, such as a diesel generator.

Referring now to FIG. 2, a simplified, internal view of an embodiment of the nacelle 161 of the wind turbine 160 of the FIG. 1 is illustrated according to the present disclosure. As shown, the generator 162 may be disposed within the nacelle 161 and coupled to the rotor 115 for generating electrical power from the rotational energy generated by the rotor 115. For example, the rotor 115 may include a main rotor shaft 163 coupled to the hub 110 for rotation therewith. The generator 162 may then be coupled to the rotor shaft 163 such that rotation of the rotor shaft 163 drives the generator 162. In addition, as shown, the generator 162 may include a generator shaft 166 rotatably coupled to the rotor shaft 163 through an optional gearbox 164.

It should be appreciated that the rotor shaft 163, the gearbox 164, and the generator 162 may generally be supported within the nacelle 161 by a support frame or bedplate 165 positioned atop the tower 170.

The nacelle 161 is rotatably coupled to the tower 170 through the yaw drive system 180 in such a way that the nacelle 161 is able to rotate about a rotating axis RA or yaw axis YA as shown in FIG. 2. The yaw drive system 180 includes a yaw bearing 181. In addition, as shown, the yaw drive system 180 may generally include a plurality of yaw drives 182 each having a yaw motor 183, a yaw gearbox 184, and a yaw drive pinion 185 for meshing with the yaw bearing 181 so as to rotate the yaw bearing 181 about the yaw axis YA.

Furthermore, and still referring to FIG. 2, each of the rotor blades 120 (only one of which is shown) may be coupled to the hub 110 via the pitch drive system 107. In an embodiment, for example, the pitch drive system 107 may include a pitch bearing 100 between each of the rotor blades 120 and the hub 110. In addition, as shown, the pitch drive system 107 may generally include at least one pitch drive pinion 108, a pitch drive motor 105, and a pitch drive gearbox 106. Thus, the pitch drive motor 105 drives rotation of the pitch drive gearbox 106 and thus the pitch drive pinion 108 so as to engage the pitch bearing 100, thereby rotating the rotor blade 120 about the pitch axis PA. As such, the rotor blade(s) 120 may perform a relative rotational movement with respect to the hub 110 when the pitch drive system 107 is actuated. The rotational movement is performed around the pitch axis PA and thus can be measured in degrees.

Referring to FIGS. 1 and 2, the wind turbine 160 may also include one or more wind parameter sensors 125, 126, 127, 128 for measuring various wind and/or operational parameters of the wind turbine 160. For example, as shown in FIG. 2, the sensor(s) 125, 126, 127, 128 may be positioned at any suitable location, such as on the hub 110, on the tower 170, on the nacelle 161, on one or more of the rotor blades 120, etc. The wind parameter(s) may be any one or combination of the following: wind gust, wind speed, wind direction, wind acceleration, wind turbulence, wind shear, wind veer, wake, wind up-flow, and the like. Further, the operational parameters may include, as an example, rotor speed, generator speed, power output, torque, loading, etc.

Moreover, in an embodiment, the sensor(s) 125, 126, 127, 128 may include any other suitable sensors, such as light detection and ranging (LIDAR) sensors, accelerometers, proximity sensors, pressure sensors, angle of attack sensors, vibration sensors, miniature inertial measurement units (MIMUs), camera systems, fiber optic systems, anemometers, wind vanes, sonic detection and ranging (SODAR) sensors, infra lasers, radiometers, pitot tubes, rawinsondes, other optical sensors, and/or any other suitable sensors. It should be appreciated that, as used herein with respect to the sensors 125, 126, 127, 128, the term "determine" and variations thereof indicates that the various sensors of the wind turbine may be configured to provide a direct measurement of the parameters being monitored or an indirect measurement of such parameters. Thus, the sensors 125, 126, 127, 128 may, for example, be used to generate signals relating to the parameter being monitored, which can then be utilized by the controller 200 to determine the actual wind condition.

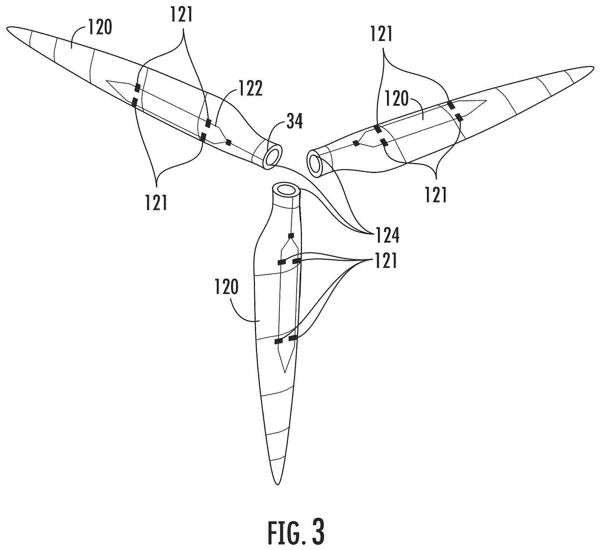

Referring now to FIG. 3, an arrangement of a plurality of the rotor blades 120 of the wind turbine 160 having load sensors 121 mounted thereon according to the present disclosure is illustrated. In such embodiments, the load sensors 121 may be utilized for measuring a deformation of one or more of the rotor blades 120. Furthermore, in an embodiment, the load sensors 121 may be strain sensors that detect a deformation/strain parameter of the rotor blades 120. For example, as shown, the load sensors 121 illustrated in FIG. 3 correspond to fiber optic strain gauges mounted on each of the rotor blades 120 so as to measure strains at any portions of the rotor blade(s) 120, e.g., a blade root 34.

Furthermore, as shown, the load sensors 121 may be connected with each other through an optical path 122, e.g., optical fiber. The optical path 122 also allows the load sensors 121 to be in communication with a sensor interrogation unit 124 or reading unit placed in the hub 110 or the nacelle 161. The sensor interrogation unit 124 is configured to feed the optical path 122 with emitted light pulses (not illustrated) and to receive light pulses from the load sensors 121. The sensor interrogation unit 124 is further configured to compare the emitted light pulses with received light pulses so as to determine deflections in the rotor blades 120. The number and location of load sensors 121 in the rotor blades 120 (or other components) may vary depending on particular requirements.

More specifically, a vibration of one or more of the rotor blades 120 may be determined when the strain or deformation parameter satisfies a strain or deformation threshold, which may be determined by the controller 200. In an embodiment, the controller 200 may include or may be integral with the sensor interrogation unit 124. Alternatively, the sensor interrogation unit 124 may be separate from the controller 200 and in data communication with each other.

In some embodiments, the load sensors 121 may be provided with temperature sensors. Temperature data from temperature sensors may be taken into account by the sensor interrogation unit 124 or even by the controller 200 because the temperature may affect operation and characteristics of load sensors 121.

Alternatively, to the example of optical strain gauges, other types of load sensors 121 capable of indicating a deformation of one or more of the rotor blades 120 or other components may be used. Examples include accelerometers or proximity sensors in data communication with the controller 200. In other embodiments, the loading conditions on various components of the wind turbine 160 may be indirectly determined.

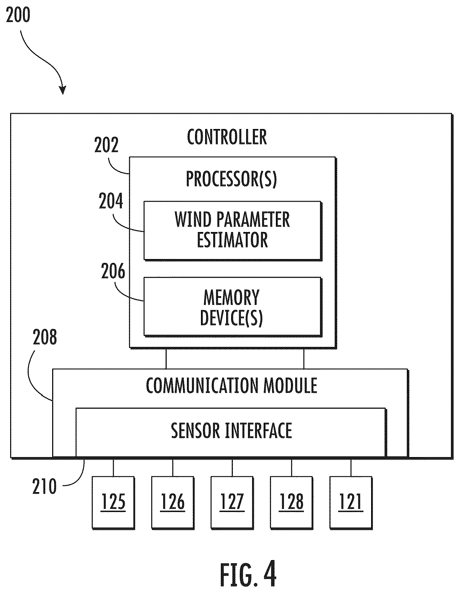

Referring now to FIG. 4, a block diagram of suitable components that may be included in a controller, such as the controller 200 described herein, is illustrated according to the present disclosure. Thus, the controller 200 illustrated in FIG. 4 may be the controller 200 or may be a separate controller. The separate controller may be configured to operate autonomously, i.e., independently from the controller 200, at least in some operating conditions, and may be able to perform tasks such as receiving and emitting signals and processing data when the controller 200 is in a non-operating state, such as when the rotor 115 is locked and/or when the wind turbine 160 is in idling mode.

In particular, as shown, the controller 200 may include one or more processor(s) 202 and associated memory device(s) 206 configured to perform a variety of computer-implemented functions (e.g., performing the methods, steps, calculations, and the like and storing relevant data as disclosed herein). The processors(s) 202 may further include a wind parameter estimator 204. The controller 200 may perform various different functions, such as receiving, transmitting and/or executing wind turbine control signals and controlling the overall operation of the wind turbine 160. The controller 200 may be programmed to control the overall operation based on information received from sensors 125, 126, 127, 128 indicating e.g., loads, wind speed, wind direction, turbulence failure of a component, and others.

The controller 200 may also include a communications module 208 to facilitate communications between the controller 200 and the components of the wind turbine 160 and their individual control systems. Further, the communications module 208 may include a sensor interface 210 (e.g., one or more analog-to-digital converters) to permit signals transmitted from the sensor(s) 125, 126, 127, 128 to be converted into signals that can be understood and processed by the controller 200. It should be appreciated that the sensor(s) 125, 126, 127, 128 may be communicatively coupled to the communications module 208 using any suitable means such as, for example, a wireless connection or a wired connection (not illustrated).

As used herein, the term "controller" refers not only to integrated circuits referred to in the art as being included in a computer, but also refers to a microcontroller, a microcomputer, a programmable logic controller (PLC), an application specific integrated circuit, and other programmable circuits. The controller 200 is also configured to compute advanced control algorithms and communicate to a variety of Ethernet or serial-based protocols (Modbus, OPC, CAN, etc.). Additionally, a memory device(s) 206 configured with the controller 200 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 206 may generally be configured to store suitable computer-readable instructions that, when implemented by the processor(s) 202, configure the controller 200 to perform the various functions as described herein.

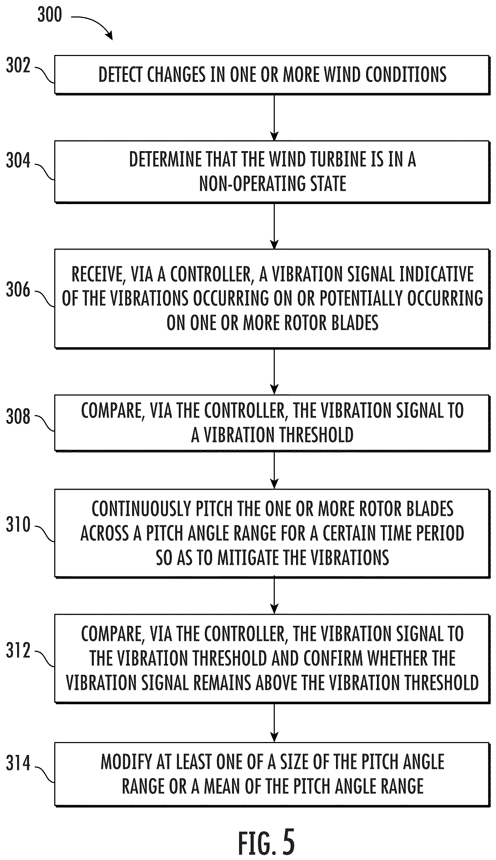

Referring now to FIG. 5, a flow diagram of an embodiment of a method 300 for mitigating vibrations occurring on or potentially occurring on one or more rotor blades of a wind turbine, such as the wind turbine 106, when the wind turbine is in a non-operating state according to the present disclosure is illustrated. As used herein, a "non-operating state" or similar is generally understood to encompass a mode of operation in which the wind turbine 160 is not supplying or obtaining electric power from the grid and thus is configured to operate independently from the grid. For example, a non-operating state may include an idling state and/or a locked state. More specifically, in a locked state, the rotor 115 (and thus the hub 110) of the wind turbine 160 is locked against rotation, for instance due to installation, commissioning, maintenance tasks, and/or any other reason. In an embodiment, in an idling state, the wind turbine 160 is not producing power but is not at a standstill and can thus still rotate. The wind turbine 160 may be idled for any reason, including, for example, low wind speeds, maintenance needs, grid management, and/or to avoid damage from excessively high wind speeds.

Furthermore, in an embodiment, the method 300 may be implemented using, for instance, the controller 200 of the present disclosure discussed above with reference to FIGS. 1-4. Thus, in an embodiment, the present disclosure contemplates that the controller 200 remains communicatively coupled to at least the pitch drive system 107 in the locked and/or idling states. Other aspects of the present disclosure rely on the determination of vibrations induced in one or more of the rotor blades 120 of the wind turbine 160.

Moreover, FIG. 5 depicts steps performed in a particular order for purposes of illustration and discussion. Those of ordinary skill in the art, using the disclosures provided herein, will understand that various steps of the method 300, or any of the methods disclosed herein, may be adapted, modified, rearranged, performed simultaneously, or modified in various ways without deviating from the scope of the present disclosure.

Optionally, as shown at (302), the controller 200 may be configured to detect changes in one or more wind conditions. Thus, in such embodiments, if certain changes in the wind condition(s) are detected, the controller 200 may activate the method 300 described herein. For example, in some embodiments, the controller 200 may be configured to determine whether a wind speed near the wind turbine 160 exceeds a speed threshold, and if so, the controller 200 may activate the method 300. In certain embodiments, the wind condition(s) may also include wind gust, wind direction, wind acceleration, wind turbulence, wind shear, wind veer, wake, wind up-flow, and the like.

In an embodiment, the controller 200 is further configured to determine a state of the wind turbine 160. For example, in an embodiment, as shown at (304), the controller 200 is configured to determine that the wind turbine 160 is in a non-operating state, e.g., by receiving signals from one or more sensors. In such an embodiment, to determine a state of the wind turbine 160, the controller 200 may receive signals from one or more sensors, such as the sensors 125, 126, 127, 128 depicted and described in FIGS. 1-4. For example, in an embodiment and as mentioned above, the sensors 125, 126, 127, 128 may include any suitable sensors for measuring various wind and/or operational parameters of the wind turbine 160. Further, in an embodiment, the sensor(s) 125, 126, 127, 128 may provide the controller 200 with signals corresponding to any one or combination of the following: wind gust, wind speed, wind direction, wind acceleration, wind turbulence, wind shear, wind veer, wake, wind up-flow, rotor speed, generator speed, power output, torque, loading, and the like. In certain embodiments, the controller 200 may be configured to determine a state of the wind turbine 160 by receiving, processing, and analyzing one or more of the signals from one or more of the sensors, as described above.

As shown at (306), the method 300 includes receiving, via a controller 200, a vibration signal indicative of the vibrations occurring on or potentially occurring on one or more rotor blades 120. For example, the controller 200 may be configured to receive signals from the sensors 121 described herein that are representative of the vibration signal. For example, in an embodiment, the controller 200 may be configured to determine the vibration signal by processing an input signal from the sensors 121, which may include a strain parameter. Further, in an embodiment, the input signal may include a waveform of the strain parameter over time, which may be received from the sensor interrogation unit 124 and/or from the load sensors 121. Furthermore, in an embodiment, the vibrations described herein may generally include SIV and VIV, as well as any other suitable type of vibrations.

In further embodiments, any suitable input signals can be used to determine the vibration signal. For example, the controller 200 may also be configured to analyze various parameters indicative of certain wind conditions that may be more likely to cause vibrations of the rotor blades 120. Examples of such parameters include, but are not limited to, wind gust, wind speed, wind direction, wind acceleration, wind turbulence, wind shear, wind veer, wake, wind up-flow, and the like.

Referring still to FIG. 5, as shown at (308), the method 300 further includes comparing, via the controller, the vibration signal to a vibration threshold. In an embodiment, for example, the controller 200 is configured to determine the vibration threshold based on one or more factors relating to design limits and/or safety of the wind turbine 160. For example, the vibration threshold may represent a vibration level that has potential to cause damage to the wind turbine 160. Thus, in certain embodiments, the vibration threshold can be adjusted based on various factors, such as wind turbine size, location, geometry, component strength, and the like, as well as other environmental factors.

In certain embodiments, when considering whether a vibration level has potential to cause damage to the wind turbine 160, the particular turbine components of interest can vary and may include, for example, the rotor blades 120 (such as the blade roots 34), the nacelle 161, the tower 170, a rotor hub locking device (not illustrated), or any other component that experiences wind-induced loads. This determination may be made, for example, by the controller 200 in a real-time computation based on input from strain/deformation sensors 121 discussed above.

As shown at (310), if the vibration signal exceeds the vibration threshold, the controller 200 is configured to continuously pitch one or more of the rotor blade(s) 120 across a pitch angle range for a certain time period so as to mitigate the vibrations. As used herein, "continuously pitch," "continuously pitching," or similar is generally understood to mean continuous rotation of one or more of the rotor blade(s) 120 about the pitch axis PA across a pitch angle range for a certain time period without stopping. In some embodiments, the pitch angle range may span less than 20 degrees, such as less than 15 degrees, less than 10 degrees, or less than 5 degrees. Furthermore, in an embodiment, the controller 200 may be programmed to optimize the pitch angle range. For example, the controller 200 may use statistical analysis or machine learning to optimize the pitch angle range.

In addition, in an embodiment, the controller 200 may be configured to determine a size of the pitch angle range and/or a mean of the pitch angle range that is suitable for reducing the vibrations as described herein. Furthermore, as described herein, the size of the pitch angle range generally refers to a certain number of degrees defined by a lower pitch angle and an upper pitch angle, whereas the mean of the pitch angle range generally refers to its plain and ordinary meaning of being a center value of a collection of values (e.g., a center value of the pitch angle range).

In certain embodiments, once the pitch angle range for the rotor blade(s) 120 is computed based on the parameters identified herein, a pitch command may be generated by the controller 200 for continuously pitching the rotor blade(s) 120 across the pitch angle range that spans the mean angle of attack for the rotor blade(s) 120. Thus, in an embodiment, the present disclosure is configured to ensure that angles of attack along the entire span avoid the SIV/VIV angles of attack and other vibrations that may occur on the rotor blades 120.

In some embodiments, the controller 200 may be configured to continuously pitch the one or more rotor blades 120 at varying pitch rates. In other embodiments, the pitch rate may remain constant. In still other embodiments, the pitch rate may vary throughout the certain time period that the controller 200 is continuously pitching the one or more rotor blades 120.

The certain time period that the controller 200 is continuously pitching may also vary in different embodiments as described herein. In some embodiments, the controller 200 may be configured to continuously pitch the one or more rotor blades 120 for as long as the controller 200 determines that the vibration signal exceeds the vibration threshold, as shown at (308). In other embodiments, the controller 200 may be configured to continuously pitch the one or more rotor blades 120 for a certain time period, such as at least 10 seconds, at least 20 seconds, at least 30 seconds, at least 40 seconds, at least 50 seconds, at least one minute, or at least two minutes.

In certain embodiments, the controller 200 may be configured to continuously pitch each of the rotor blades 120 based on different pitch angle ranges, which may be periodically updated based on detection of changing wind parameters. For example, the mean of the pitch angle range for each of the rotor blades 120 may be based on optimal angles of attack, which may be determined by an initial blade orientation and/or varying wind parameters at different relative rotational positions.

Referring still to FIG. 5, as shown in (312), the method 300 may optionally include comparing, via the controller 200, the vibration signal to the vibration threshold, and confirming whether the vibration signal remains above the vibration threshold. In an embodiment, if the controller 200 determines that the vibration signal no longer exceeds the vibration threshold, the controller 200 may stop continuously pitching the rotor blade(s) 120 across the pitch angle range. In an alternative embodiment, as shown at (314), if the vibration signal remains above the vibration threshold, the controller 200 may be configured to modify at least one of a size of the pitch angle range or a mean of the pitch angle range, e.g., in an effort to further reduce the vibrations. In some embodiments, for example, modifying the size of the pitch angle range may include decreasing or increasing the size of the pitch angle range.

Still further embodiments of the present disclosure may include deactivating the method 300, e.g., when the vibration signal no longer exceeds the vibration threshold and/or upon detection of certain changes in nearby wind conditions. For example, after continuously pitching across the pitch angle range for the certain time period, the controller 200 may be configured to measure a wind condition, and upon detecting a change in the wind condition, the controller 200 may stop continuously pitching across the pitch angle range. In such embodiments, examples of measured wind conditions may include wind gust, wind speed, wind direction, wind acceleration, wind turbulence, wind shear, wind veer, wake, wind up-flow, and the like. In some embodiments, the controller 200 may be configured to deactivate the method 300 upon detecting an increase in one or more of the measured wind conditions described above. In alternative embodiments, the controller 200 may be configured to deactivate the method 300 upon detecting a decrease in one or more of the measured wind conditions described above.

In some embodiments of the present disclosure, the controller 200 may also be configured to coordinate the pitching of the rotor blades 120 in phases to reduce varying levels of vibrations throughout the wind turbine 160. For example, the rotor blades 120 may be pitched in phase to reduce vibrations resulting from tilt, yaw, fore-aft, and the like.

For any of the embodiments described herein, the controller 200 may be programmed with prescribed settings as a default method if measurement feedback is or becomes unavailable.

Furthermore, in an embodiment, the method described in the present disclosure may be used to supplement an automated pitch control system as described in U.S. Application Serial No.: 12/012,934, which is fully incorporated herein by reference in its entirety. Thus, in an embodiment, in cases where an automated pitch control system may become ineffective, such as when the wind turbine 160 is experiencing excessive levels of vibration, instead of reverting to a feathered state, the method 300 described herein may be employed to introduce continuous pitching to the automated pitch control system. In such embodiments, as mentioned, the method 300 may involve continuous pitching across the pitch angle range based on an auto-calibrated pitch angle. For example, the mean of the pitch angle range may be the auto-calibrated pitch angle. Further aspects of such an embodiment may include switching between the method 300 described herein to the automated pitch control system, either manually or automatically, based on vibration levels.

In certain embodiments, the method 300 may be used to supplement automated pitch control systems by using continuous pitching near the feathered position in high wind conditions. As such, systems and methods of the present disclosure provide a reduced risk of SIV or VIV compared to maintaining the rotor blades 120 in a feathered position when automated pitching is not feasible due to high winds. In such an embodiment, the method 300 may include continuously pitching the rotor blades 120 around the feathered position, such as from about 85 degrees to about 95 degrees. As described above, this embodiment may also allow for dynamic switching between automated pitching and continuous pitching based on wind speed conditions.

Further aspects of the invention are provided by the subject matter of the following clauses:

A method for mitigating vibrations occurring on or potentially occurring on one or more rotor blades of a wind turbine when the wind turbine is in a non-operating state, the method comprising: receiving, via a controller, a vibration signal indicative of the vibrations occurring on or potentially occurring on the one or more rotor blades; comparing, via the controller, the vibration signal to a vibration threshold; and in response to the vibration signal being above the vibration threshold, continuously pitching the one or more rotor blades back and forth across a pitch angle range for a certain time period so as to mitigate the vibrations.

The method of any preceding clause, further comprising, after continuously pitching the one or more rotor blades back and forth across the pitch angle range for the certain time period, confirming whether the vibration signal remains above the vibration threshold.

The method of any preceding clause, further comprising modifying at least one of a size or a mean of the pitch angle range.

The method of any preceding clause, further comprising continuously modifying at least one of a size or a mean of the pitch angle range until the vibration signal drops below the vibration threshold.

The method of any preceding clause, further comprising optimizing the pitch angle range using at least one of statistical analysis or machine learning.

The method of any preceding clause, wherein the certain time period is at least about 10 seconds.

The method of any preceding clause, wherein the pitch angle range is less than about 15 degrees.

The method of any preceding clause, further comprising maintaining a pitch rate of continuously pitching of the one or more rotor blades at a constant rate.

The method of any preceding clause, further comprising varying a pitch rate of continuously pitching of the one or more rotor blades.

The method of any preceding clause, further comprising: determining whether a wind speed near the wind turbine exceeds a speed threshold; and when the wind speed near the wind turbine exceeds the speed threshold, beginning to receive the vibration signal.

The method of any preceding clause, further comprising at least one of measuring the vibration signal using at least one sensor or determining the vibration signal via the controller.

The method of any preceding clause, wherein after continuously pitching the one or more rotor blades back and forth across the pitch angle range for the certain time period, the method further comprises measuring a wind condition, and upon detecting a specified wind condition, stopping the pitching.

The method of any preceding clause, wherein the wind condition comprises at least one of wind gust, wind direction, wind acceleration, wind turbulence, wind shear, wind veer, wake, or wind up-flow.

The method of any preceding clause, wherein continuously pitching the one or more rotor blades back and forth across the pitch angle range for the certain time period further comprises coordinating the pitching between multiple blades based on at least one of a phase or loading on at least one of the one or more rotor blades or other turbine components.

A wind turbine, comprising: a plurality of rotor blades on a rotatable hub; one or more sensors configured to detect wind parameters impacting the plurality of rotor blades; a pitch system configured to change a pitch angle of one or more of the plurality of rotor blades; and a controller in operable communication with the pitch system, wherein when the wind turbine is in a non-operating or locked rotor state, the controller is configured to perform a plurality of operations, the plurality of operations comprising: receiving a vibration signal indicative of the vibrations occurring on or potentially occurring on the one or more of the plurality of rotor blades; comparing, via the controller, the vibration signal to a vibration threshold; and in response to the vibration signal being above the vibration threshold, continuously pitching one or more of the plurality of rotor blades back and forth across a pitch angle range for a certain time period so as to mitigate the vibrations.

The wind turbine of any preceding clause, wherein after continuously pitching one or more of the plurality of rotor blades back and forth across the pitch angle range for the certain time, the controller is further configured to confirm whether the vibration signal remains above the vibration threshold.

The wind turbine of any preceding clause, wherein the controller is further configured to modify at least one of a size or a mean of the pitch angle range.

The wind turbine of any preceding clause, wherein the controller is further configured to continuously modify at least one of a size or a mean of the pitch angle range until the vibration signal drops below the vibration threshold.

The wind turbine of any preceding clause, wherein the plurality of operations further comprises optimizing the pitch angle range using at least one of statistical analysis or machine learning.

The wind turbine of any preceding clause, wherein continuously pitching one or more of the plurality of rotor blades back and forth across the pitch angle range for the certain time period further defines coordinating a pitching between multiple blades based on at least one of a phase or calculated or measured or loading on the one or more rotor blades and/or other turbine components.

This written description uses examples to disclose the invention, including the best mode, and also enables any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

## Claims

1. A thermal management system (300) for a wind turbine (100), the thermal management system comprising:
at least one access door (302) arranged adjacent to one or more components of the wind turbine that need cooling, the at least one access door comprising at least one opening (304);
a filtration device (306) arranged in the at least one opening, the filtration device comprising:
at least one filter (308) arranged in the at least one opening;
at least one louver (310) arranged adjacent to and external of the at least one filter; and
at least one filter cover (312) arranged adjacent to and external of the at least one louver,
wherein the at least one filter cover passively directs airflow through open sides (322) of the at least one filter cover to optimize cooling of the one or more components and to reduce dust particles from entering the wind turbine.

2. The thermal management system of claim 1, wherein the open sides of the at least one filter cover are open vertical sides.

3. The thermal management system of claim 1 or 2, wherein the at least one filter cover comprises a base panel (316) and opposing side panels (318) secured to the at least one access door via one or more flanges (320).

4. The thermal management system of any of the preceding claims, wherein the filtration device further comprises a bird screen arranged between the at least one filter and the at least one louver.

5. The thermal management system of any of the preceding claims, wherein the at least one opening comprises a first opening (305) and a second opening (307) and the at least one filter cover comprises a first filter cover (313) and a second filter cover (315), the first opening and the first filter cover being above the second opening and the second filter cover.

6. The thermal management system of any of the preceding claims, wherein the filtration device is downtower of the wind turbine, particularly wherein the one or more components of the wind turbine that need cooling comprise at least one of a power converter (220) or a cabinet,
and more particularly wherein the at least one access door is part of a tower of the wind turbine to align the at least one filter with one or more inlets (324) of the power converter, and wherein the at least one filter cover passively directs the airflow through the open sides of the at least one filter cover towards the one or more inlets of the power converter to optimize cooling of one or more switching devices of the power converter.

7. The thermal management system of any of the preceding claims, wherein the filtration device is uptower of the wind turbine, particularly wherein the one or more components of the wind turbine that need cooling comprise at least one of a generator (118) or a cabinet (121).

8. The thermal management system of claim 7, wherein the at least one access door is part of a nacelle (106) of the wind turbine to align the at least one filter with at least one of the generator or the cabinet, and wherein the at least one filter cover passively directs the airflow through the open sides of the at least one filter cover towards at least one of the generator or the cabinet to optimize cooling of at least one of the generator or the cabinet,
particularly wherein the at least one access door is located on at least one of a rear side or a longitudinal side of the nacelle of the wind turbine.

9. The thermal management system of any of the preceding claims, further comprising one or more sensors for detecting at least one of pressure sensor or velocity so as to detect a need for cleaning of the filter.

10. A method for cooling one or more components of a wind turbine (400), the method comprising:
arranging at least one opening adjacent to one or more components of
the wind turbine that need cooling (402);
arranging a filtration device in the at least one opening, the filtration device having at least one filter cover arranged adjacent to and external of the at least one opening (404);
passively directing airflow through open sides of the at least one filter cover to optimize cooling of the one or more components and to reduce dust particles from entering the wind turbine (406).

11. The method of claim 10, wherein the filtration device further comprises at least one filter arranged in the at least one opening and at least one louver arranged adjacent to and external of the at least one filter, the at least one filter cover further comprising a base panel and opposing side panels secured over the at least one opening via one or more flanges.

12. The method of claim 10 or 11, further comprising arranging a bird screen between the at least one filter and the at least one louver.

13. The method of any of claims 10 to 12, further comprising arranging the filtration device downtower of the wind turbine,
particularly wherein the one or more components of the wind turbine that need cooling comprise at least one of a power converter or a cabinet, and wherein the at least one opening is part of a tower of the wind turbine to align the at least one filter with one or more inlets of the power converter, and wherein the at least one filter cover passively directs the airflow through the open vertical sides of the at least one filter cover towards the one or more inlets of the power converter to optimize cooling of one or more switching devices of the power converter.

14. The method of any of claims 10 to 13, further comprising arranging the filtration device uptower of the wind turbine, wherein the one or more components of the wind turbine that need cooling comprise at least one of a generator or a cabinet, and wherein the at least one opening is part of a nacelle of the wind turbine to align the at least one filter with at least one of the generator or the cabinet, and wherein the at least one filter cover passively directs the airflow through the open sides of the at least one filter cover towards at least one of the generator or the cabinet to optimize cooling of at least one of the generator or the cabinet.

15. A filtration device (306) for a wind turbine (100), the filtration device comprising:
at least one filter (308) arranged in at least one opening (304) of the wind turbine;
at least one louver (310) arranged adjacent to and external of the at least one filter; and
at least one filter cover (312) arranged adjacent to and external of the at least one louver,
wherein the at least one filter cover passively directs airflow through open sides (322) of the at least one filter cover to optimize cooling of one or more components of the wind turbine and to reduce dust particles from entering the wind turbine.
